Europäisches Patentamt

European Patent Office

Office européen des brevets

(19)

(11) Numéro de publication: **0 250 291 B1**

(12) **FASCICULE DE BREVET EUROPEEN**

(45) Date de publication de fascicule du brevet:
21.08.91

(51) Int. Cl.⁵: **G21C 17/08**

(21) Numéro de dépôt: **87401276.8**

(22) Date de dépôt: **05.06.87**

(54) **Procédé d'immersion d'un transducteur à ultrasons dans un métal liquide, avec un bon mouillage, et dispositif pour la mise en oeuvre du procédé.**

(30) Priorité: **17.06.86 FR 8608743**

(43) Date de publication de la demande:
**23.12.87 Bulletin 87/52**

(45) Mention de la délivrance du brevet:
**21.08.91 Bulletin 91/34**

(84) Etats contractants désignés:
**DE GB**

(56) Documents cités:
**FR-A- 1 477 470**
**FR-A- 1 588 441**
**FR-A- 2 271 581**
**GB-A- 1 461 944**

**IEEE TRANSACTIONS ON NUCLEAR SCIENCE, vol. 27, no. 1, février 1980, pages 821-825, IEEE, New York, US; J. TAGUCHI et al.: "An ultrasonic viewing system in liquid sodium"**

(73) Titulaire: **FRAMATOME**
**Tour Fiat 1, Place de la Coupole**
**F-92400 Courbevoie(FR)**

(72) Inventeur: **Le Baud, Patrice**
**60 rue Marie Fichet**
**F-92140 Clamart(FR)**

(74) Mandataire: **Polus, Camille et al**
**c/o Cabinet Lavoix 2, Place d'Estienne d'Orves**
**F-75441 Paris Cedex 09(FR)**

## Description

L'invention concerne un procédé de revêtement et d'immersion dans un métal liquide, d'un transducteur à ultrasons, assurant un bon mouillage et un bon couplage entre le transducteur et le métal liquide. L'invention concerne également un dispositif permettant la mise en oeuvre de ce procédé.

On utilise couramment les ultrasons pour effectuer des mesures, des contrôles ou des observations dans des liquides et en particulier dans des liquides non transparents tels que les métaux liquides. Pour la mise en oeuvre de ces procédés de mesure ou de contrôle ou pour effectuer des observations grâce aux ultrasons, on doit réaliser un couplage entre un transducteur ultrasonore qui peut être utilisé comme émetteur et/ou récepteur et un métal liquide qui peut être le métal liquide dans lequel on effectue les contrôles ou observations ou, de façon plus courante, un métal remplissant un guide d'onde mettant en communication la tête de mesure ultrasonore avec la zone dans laquelle on effectue les contrôles ou observations, à l'intérieur du métal liquide.

Pour réaliser un bon couplage entre le transducteur et le métal liquide dans lequel il est immergé, il est nécessaire que la surface externe du transducteur, dans la zone de couplage, soit parfaitement mouillée par le liquide. Une telle condition est difficile à réaliser dans le cas des métaux liquides et en particulier dans le cas de métaux liquides dont la température est basse et seulement légèrement supérieure au point de fusion de ces métaux.

Dans le cas des réacteurs nucléaires à neutrons rapides refroidis par un métal liquide tel que le sodium, il est nécessaire d'assurer une visualisation des têtes d'assemblage constituant le coeur du réacteur nucléaire, au moins au moment ou l'on effectue la manutention du combustible, afin de vérifier que chacun des assemblages est dans une position correcte. On utilise pour cela un dispositif de visualisation par ultrasons que les techniciens désignent sous le nom de "visus".

Un tel appareil est décrit dans FR-A- 1 588 441 et comporte un transducteur a ultrasons qui plonge dans le sodium liquide primaire remplissant la cuve du réacteur nucléaire. Les ultrasons sont transmis dans un sens et dans l'autre, entre le transducteur et la partie supérieure du coeur du réacteur par un guide d'onde qui est constitué par un tube rempli par un métal ou alliage à faible point de fusion, tel que l'alliage eutectique sodium-potassium, appelé NaK. La partie supérieure du guide d'onde est en effet constituée par un récipient renfermant du NaK situé au-dessus de la dalle du réacteur nucléaire, dans une zone où règne une température voisine de l'ambiante, si bien que le métal liquide du guide d'onde doit être choisi pour rester liquide à une température relativement basse. Le transducteur plonge dans le métal liquide du récipient à température ambiante et réalise ainsi le couplage transducteur-guide d'onde. Le récipient situé à la partie supérieure du guide d'onde constitue la partie froide de ce guide dans laquelle viennent se déposer des impuretés telles que des oxydes.

En fait, des impuretés sont toujours présentes à la surface du métal liquide constituant le guide d'onde même si l'on effectue une épuration poussée de ce métal liquide. Lorsqu'on immerge le transducteur dans le métal liquide du guide d'onde, en lui faisant traverse le niveau libre supérieur de ce métal, des particules d'impuretés se déposent sur la surface externe de couplage du transducteur, si bien que le mouillage de cette surface par le métal liquide est médiocre et qu'il en résulte un couplage déficient. La qualité des mesures des contrôles ou des observations s'en ressent.

Le mouillage de la surface du transducteur par le métal liquide est d'autant plus médiocre que la température de ce métal liquide est proche du point de fusion du métal ou alliage utilisé pour le guide d'onde, les oxydes n'étant pas réduits ou se trouvant sous une forme non soluble.

Le but de l'invention est donc de proposer un procédé d'immersion dans un métal liquide avec un bon mouillage, d'un transducteur à ultrasons comportant une enveloppe métallique renfermant la partie active du transducteur et assurant le couplage avec le métal liquide, par une partie de sa surface externe, le métal liquide comportant un niveau libre supérieur surmonté par une atmosphère de gaz neutre susceptible d'être pollué par des impuretés qui se déposent sur la surface de couplage du transducteur, lors de son immersion et réduisent en conséquence la mouillabilité et la qualité du couplage de cette surface, procédé permettant d'assurer un très bon couplage du transducteur et du guide d'onde, même en présence d'une quantité importante d'impuretés à la surface du métal liquide et dans le cas où ce métal liquide est à une température très proche du point de fusion du métal.

Dans ce but :

- on met en contact dans un récipient indépendant la surface de couplage du transducteur avec une couche de métal liquide analogue au métal dans lequel on doit réaliser l'immersion du transducteur, de façon à assurer un bon mouillage de la surface de couplage par le métal liquide,
- on contrôle la qualité de ce mouillage,
- on provoque la solidification de la couche de métal liquide sur la surface de couplage du tranducteur,

- et on réalise, sous atmosphère neutre, l'extraction du transducteur portant la couche de métal solidifiée sur sa surface de couplage, du récipient et son introduction dans le métal liquide d'immersion.

L'invention a également trait a un dispositif utilise pour la mise en oeuvre de ce procédé tel que decrit dans la revendication 15.

Afin de bien faire comprendre l'invention, on va maintenant décrire, à titre d'exemple non limitatif, en se référant aux figures jointes en annexe, un mode de réalisation du procédé suivant l'invention et du dispositif utilisé pour la mise en oeuvre de ce procédé, dans le cas d'un dispositif de visualisation à ultrasons d'un réacteur nucléaire à neutrons rapides refroidi par du sodium liquide.

La figure 1 est une vue en coupe et en élévation latérale du dispositif de visualisation en place dans la cuve du réacteur nucléaire et des moyens qui lui sont associés pour le revêtement et l'immersion de son transducteur.

La figure 2 est une vue en coupe à plus grande échelle du transducteur, pendant la phase de revêtement par une couche de métal de couplage solidifiée.

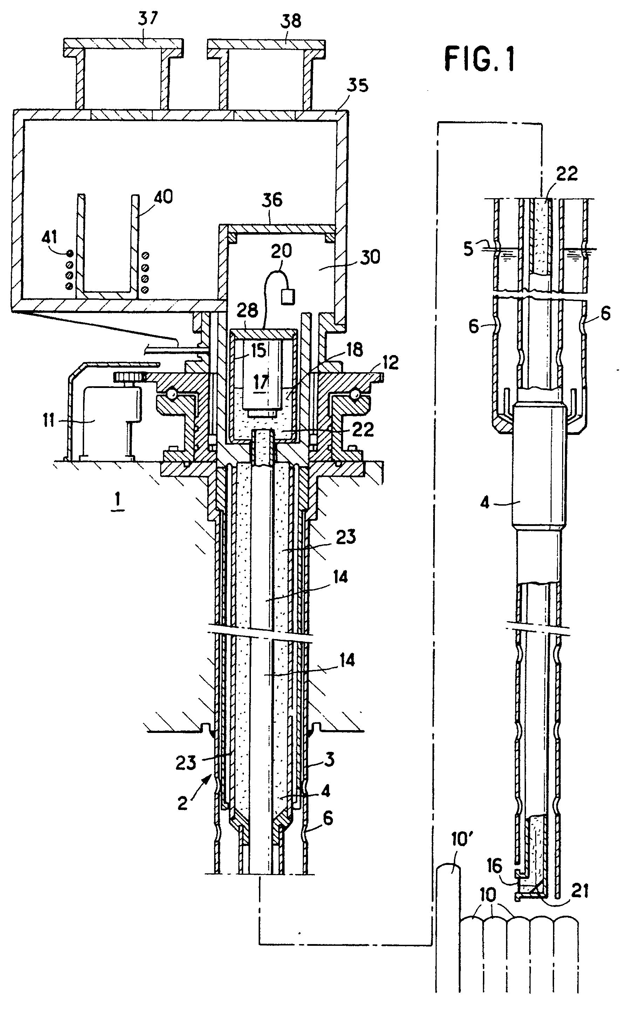

Sur la figure 1, on voit la dalle 1 de grande épaisseur fermant la cuve d'un réacteur nucléaire dans laquelle est monté un dispositif de visualisation à ultrasons désigné de manière générale par le repère 2.

Un dispositif de visualisation ou "visus" tel que le dispositif 2 peut être monté directement sur la dalle du réacteur, au niveau d'une ouverture la traversant sur toute son épaisseur ou sur un bouchon tournant monté rotatif autour d'un axe vertical sur cette dalle.

Le visus comporte un corps fixe tubulaire 3 traversant la dalle et un ensemble mobile 4 monté rotatif dans le corps tubulaire 2 autour de l'axe de ce corps fixe. La partie inférieur du corps fixe 2 plonge sous le niveau supérieur 5 du sodium primaire remplissant la cuve du réacteur et comporte des ouvertures 6 permettant au sodium primaire de pénétrer dans cette partie inférieure du corps 2.

Le corps 2 assure la protection et la guidage de l'ensemble mobile 4 dont la partie inférieure, en-dessous de l'extrémité inférieure du corps 2, pénètre dans le sodium primaire du réacteur nucléaire jusqu'au niveau des parties supérieures, ou têtes, des assemblages 10 constituant le coeur du réacteur.

L'ensemble mobile 4 peut être mis en rotation autour de son axe par un moteur 11 fixé sur la dalle du réacteur et dont l'arbre de sortie porte un pignon venant en prise avec une couronne dentée 12 faisant partie de l'emsemble mobile 4.

L'ensemble mobile 4 comporte plusieurs enveloppes tubulaires sensiblement coaxiales. Le tube central 14 de l'ensemble mobile 4 est rempli de métal liquide et constitue un guide d'onde qui est en communication à sa partie supérieure avec un récipient 15 situé au-dessus de la dalle 1 et qui est fermé à sa partie inférieure par une fenêtre 16 pratiquement verticale.

Le récipient 15 dans lequel débouche la partie supérieure du tube 14 renferme du métal liquide sous le niveau supérieur 18 duquel plonge la partie inférieure du transducteur à ultrasons 17, dans sa position de service, comme représenté sur la figure 1.

Le transducteur 17 est couplé par un câblage 20 à une source électrique et à un ensemble de traitement des signaux électriques en provenance du transducteur 17.

Le couplage entre le transducteur 17 et la guide d'onde est assuré par contact direct entre la partie inférieure de la surface externe du transducteur et le métal liquide contenu dans le récipient 15.

La qualité du couplage dépend donc de la mouillabilité de la surface de couplage du transducteur 17.

Lorsque des ondes ultrasonores sont émises par le transducteur 17 alimenté par le câble 20, ces ondes se propagent à travers le métal liquide 22, d'abord dans le récipient 15 puis dans le tube 14, pour parvenir à la partie inférieure du tube 14 où est disposé un réflecteur d'ultrasons 21 permettant de renvoyer le faisceau d'ultrasons dans une direction horizontale vers la fenêtre 16. Le faisceau d'ultrasons pénètre alors dans le sodium liquide primaire remplissant la cuve et baignant les assemblages 10.

Dans le cas où un assemblage tel que l'assemblage 10′ est dans une position défectueuse, le faisceau d'ultrasons, au cours de la rotation de l'ensemble 4 autour de son axe, rencontre la surface de cet assemblage 10′ et un signal ultrasonore est renvoyé par le chemin inverse de celui qui a été décrit, pour parvenir au transducteur 17.

Un signal électrique est alors transmis à l'unité de traitement et de surveillance par le câblage 20.

On peut ainsi effectuer une certaine visualisation des têtes d'assemblage, cette visualisation pouvant être extrêmement fine et permettre, par exemple, la reconnaissance et la lecture de signes d'identification des assemblages.

De préférence, le métal liquide contenu dans le tube 14 et le récipient 15 est du NaK dont la température de fusion est voisine de la température ambiante. Cet alliage reste ainsi à l'état liquide, même dans la partie supérieure du guide d'onde constituée par le récipient 15 qui est à une température voisine de l'ambiante. Ce maintien à l'état liquide est obtenu sans utiliser de moyen de chauffage additionnel qui compliquerait l'installation.

Cependant, le métal liquide 22 est, dans le récipient 15, à une température proche du point de fusion du NaK, ce qui n'est pas favorable pour obtenir un bon mouillage de la surface de couplage du transducteur 17. De plus, des particules d'impuretés sont constamment présentes sur le niveau 18 du métal liquide dans le récipient 15 et la surface de couplage du transducteur 17 se recouvre de ces impuretés lorsqu'on fait pénétrer le transducteur 17 dans le métal liquide du récipient 15, en traversant le niveau 18.

La protection biologique du visu est assurée par un garnissage de matériau d'isolation 23 placé autour du tube 14, à l'intérieur d'une des enveloppes tubulaires de l'ensemble mobile 4. La hauteur du garnissage 23 est supérieure à l'épaisseur de la dalle, ce qui permet une protection biologique efficace contre les radiations venant de l'intérieur de la cuve.

La partie supérieure du transducteur 17 est solidaire d'une plaque de support et de manutention 28 traversée par le câble d'alimentation 20.

La manutention du transducteur 17 pour son extraction ou sa mise en place dans le récipient 15 doit se faire dans une atmosphère de gaz neutre tel que l'argon, l'alliage NaK étant spontanément inflammable dans une atmosphère oxydante. La zone 30 au-dessus du récipient 15 est donc remplie de gaz neutre.

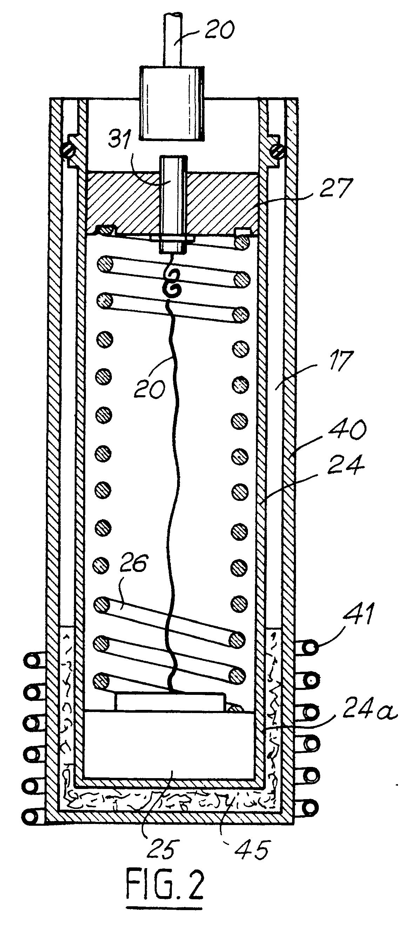

Sur la figure 2, on voit que le transducteur à ultrasons 17 comporte une enveloppe métallique tubulaire 24 fermée à sa partie inférieure et une partie active 25 maintenue en contact avec le fond de l'enveloppe métallique 24 par un ressort 26 en appui, à son autre extrémité, sur un couvercle 27 fixé de façon amovible dans la partie supérieure de l'enveloppe métallique 24. Le couvercle 27 porte une douille de traversée 31 permettant le passage du câble 20 qui est relié, à son extrémité inférieure, à la partie active 25 du transducteur 17.

La partie inférieure 24a de l'enveloppe métallique 24 du transducteur constitue la surface de couplage par laquelle les ondes ultrasonores sont transmise au métal liquide 22, lorsque le transducteur est en position de service, comme représenté sur la figure 1.

Pour la mise en oeuvre du procédé de revêtement et d'immersion suivant l'invention, lors de la mise en place d'un nouveau transducteur dans un dispositif de visualisation, l'enveloppe métallique 24 du nouveau transducteur est séparée de la partie active 25 par démontage du couvercle 27.

Sur la figure 1, on a représenté de façon schématique l'ensemble du dispositif permettant de réaliser le revêtement final et l'immersion du transducteur 17 dans le métal 22 du guide d'onde.

Ce dispositif comporte une boîte à gants 35 fixée de façon amovible sur la couronne dentée 12 de support du visus 2. Cette boîte à gants 35 entoure la zone 30 en gaz neutre surmontant le récipient 15 du guide d'onde et communique avec cette zone 30 par une paroi amovible 36.

La boîte à gants 35 comporte deux tapes d'ouverture 37 et 38 qui peuvent être refermées de manière étanche. La boîte à gants 35 renferme, pour la mise en oeuvre du procédé suivant l'invention, un creuset 40 réalisé en un matériau à faible adhérence avec le métal liquide.

Le creuset 40 présente une hauteur un peu supérieure à la hauteur hors tout du transducteur 17 et un diamètre intérieur supérieur de quelques millimètres au diamètre extérieur de la partie inférieure 24a de l'enveloppe métallique 24 du transducteur 17.

Pour la mise en place du transducteur 17 sur le dispositif de visualisation, la boîte à gants 35 est ouverte et mise à l'atmosphère extérieure, la paroi amovible et étanche 36 étant soigneusement fermée. Le transducteur 17 est introduit dans la boîte à gants 35 qui est ensuite refermée, évacuée et remplie par une atmosphère de gaz neutre identique à l'atmosphère remplissant la zone 30. Une petite quantité de NaK propre est introduite dans le fond du creuset 40 et le boîtier du transducteur 17 est placé dans le creuset 40 de façon que sa partie inférieure 24a trempe dans le NaK liquide remplissant le fond du creuset 40.

Sur la figure 2, on a représenté le transducteur 17 en position dans le creuset 40, le NaK liquide 45 étant réparti autour de la partie inférieure 24a de l'enveloppe métallique 24, dans le fond du creuset 40. L'ensemble est d'abord chauffé à une température supérieure à 300° C ce qui assure une parfaite dissolution des quelques oxydes qui peuvent exister et la mouillabilité du métal du boîtier avec le NaK. L'ensemble est ensuite refroidi puis on met en place la partie active du transducteur dans le boîtier. Le branchement du câble 20 est effectué de façon à pouvoir alimenter la partie active 25 du transducteur 17. On vérifie, en émettant un signal ultrasonore ou par une mesure de l'impédance du capteur, que le mouillage de la surface externe de la partie 24a de l'enveloppe 24 est satisfaisant.

Lorsqu'on a vérifié que le mouillage est satisfaisant, l'ensemble comportant le creuset en pyrex 40, la couche de NaK 45 et le transducteur 17 est placé dans un dispositif de refroidissement 41 constitué par un serpentin qui peut être parcouru par un fluide frigorifique. La circulation du fluide frigorifique permet d'amener la température du NaK à une valeur voisine de -15° C.

La couche de NaK 45 est alors solidifiée et solidement adhérente sur la partie inférieure 24a de l'enveloppe métallique 24.

Lors de sa solidification et de sa congélation, la couche 45 de NaK subit un retrait de solidification important par rapport au creuset 40.

Le transducteur muni de son revêtement de NaK solidifié peut être facilement séparé du creuset, du fait de ce retrait et du fait que le NaK ne réalise pratiquement pas de mouillage de la surface du creuset.

La paroi amovible 36 est alors ouverte et le transducteur 17 est descendu dans le récipient 15 du guide d'onde, dans sa position représentée sur la figure 1.

Si le NaK constituant le métal liquide du guide d'onde est pollué, les particules d'impuretés qui se trouvent sur sa surface 18 sont susceptibles de se déposer sur la partie inférieure du transducteur 17 revêtue par la couche NaK solidifiée 45. Cependant, dès que le transducteur 17 est introduit dans le NaK du guide d'onde, il se produit une refusion de la couche 45 et les oxydes déposés sur la surface externe de ce revêtement remonteront à la surface supérieure 18 du métal liquide dans le récipient 15. L'excellent mouillage obtenu dans le creuset 40 est donc maintenu, lors de la refusion de la couche 45 de NaK dans le récipient 15.

On assure donc ainsi un mouillage parfait et un couplage de très bonne qualité entre la surface externe du transducteur et le guide d'onde. Ces résultats sont obtenus sans avoir à épurer le métal du guide d'onde et sans avoir à nettoyer ou "écrémer" le niveau supérieur de ce métal, ce qui est particulièrement difficile.

Une variante du procédé permet de procéder à une température plus faible pour assurer un très bon mouillage du transducteur par la couche de métal liquide avant de solidifier cette couche de métal. Le boîtier du transducteur subit un traitement de surface préalable qui peut avoir lieu dans un local, de service quelconque de la centrale nucléaire ou même, à l'extérieur de cette centrale.

Ce traitement de surface préalable de l'enveloppe 24, dans le cas où cette enveloppe est en acier inoxydable, comporte un étuvage sous atmosphère d'hydrogène, à une température comprise entre 400 et 500° C, puis un second étuvage sous vide à une température également comprise entre 400 et 500° C.

L'étuvage sous hydrogène permet d'éliminer toute trace d'oxygène ou de corps renfermant de l'oxygène à la surface de l'enveloppe 24 ; l'étuvage sous vide ultérieur permet d'éliminer toute trace d'hydrogène à la surface ou dans les couches superficielles de l'enveloppe 24.

La surface externe de l'enveloppe 24 parfaitement nettoyée par étuvage est alors revêtue d'une couche d'argent de quelques micromètres, par un procédé de revêtement sous vide, tel que le procédé PVD (Physical Vapor Deposition) qui procède par évaporation sous vide du métal à déposer dont la vapeur vient se refroidir au contact de la surface à revêtir. On obtient ainsi une couche d'argent parfaitement propre et sans inclusion d'oxyde ou de gaz dissous, intimement liée à la surface externe soigneusement nettoyée par un étuvage préalable, de l'enveloppe métallique 24.

Au lieu d'un dépôt d'argent, on peut effectuer un dépôt d'or ou de platine. De manière générale, on utilisera soit un métal dont les oxydes ont une faible enthalpie libre de formation et sont donc susceptible d'être très facilement réduits doit un métal très faiblement oxydable.

Le dépôt de métal sur la surface externe de l'enveloppe métallique 24 peut être limité à la zone 24a de cette enveloppe qui constitue la surface de couplage du transducteur 17, par laquelle les ondes ultrasonores sont transmisses au métal liquide du guide d'onde.

On réalise alors de montage du transducteur 17 en introduisant sa partie active 25 dans l'enveloppe 24 et en en assurant le blocage et la fixation grâce au ressort 26 et au couvercle 27.

L'ensemble du transducteur ainsi équipé est introduit dans la boîte à gants comme précédemment et l'onprocède aux mêmes opérations à partir du creuset qui contient le métal liquide ; cependant, l'opération de chauffage à 300° C n'est pas effectuée.

Il est bien evident que l'invention ne se limite pas au mode de réalisation qui vient d'être décrit.

C'est ainsi que, dans le cas de la seconde variante, le traitement préalable d'étuvage sous hydrogène et sous vide peut être réalisé à une tempéra ture différente des températures qui ont été indiquées, dans le cas d'une enveloppe métallique en un matériau différent de l'acier inoxydable.

Le revêtement de l'enveloppe métallique consécutif à cet étuvage peut être réalisé avec tout métal faiblement oxydable ou tout métal dont l'enthalpie libre de formation des oxydes est faible. Dans le premier cas, le revêtement métallique n'est pas susceptible de se réoxyder et dans le second cas les oxydes formés sont facilement décomposés au contact du NaK liquide, si bien que la mouillabilité reste bonne, même en cas de réoxydation.

L'épaisseur de cette couche métallique mince sera, dans tous les cas, comprise entre 2 et 10 micromètres.

Cette couche pourra être obtenue par d'autres procédés de revêtement sous vide que le procédé PVD, par exemple tout procédé utilisant une pulvérisation de métal par bombardement électronique ou ionique.

Le maintien en température de l'enveloppe du transducteur et de la couche de métal liquide mise à son contact sera effectué, dans le cas de la première variante, à une température qui permet une bonne dissolution des oxydes fixés sur la surface externe de l'enveloppe. Cette température est toujours supérieure à 300° C même dans le cas des métaux liquides à bas point de fusion tels que le NaK.

L'épaisseur de la couche de métal mise au contact de la surface de couplage du transducteur puis solidifiée, cette épaisseur étant fonction du jeu radial et du jeu axial entre le transducteur et le creuset, sera toujours comprise entre 1 et 10 millimètres.

Au lieu d'un creuset de pyrex, il est possible d'utiliser un creuset en polyéthylène, étant donné le bas point de fusion du NaK, dans le cas de la seconde variante, sans chauffage à 300° C.

Le refroidissement de la couche de métal liquide pour sa solidification sur la surface externe du transducteur pourra être réalisé non seulement par un serpentin parcouru par un fluide frigorifique mais encore par une cellule à effet Peltier. Il suffit alors d'une alimentation électrique à l'intérieur de la boîte à gants pour mettre en oeuvre le refroidissement.

La constitution d'une couche métallique liquide et son maintien au contact de la surface externe du transducteur peuvent être réalisés en utilisant un dispositif différent d'un creuset dans lequel on vient tremper l'extrémité du transducteur.

Enfin, le procédé et le dispositif suivant l'invention peuvent s'appliquer au revêtement et à la mise en place de transducteurs différents des transducteurs des dispositifs de visualisation des réacteurs nucléaires à neutrons rapides. Ce procédé et ce dispositif peuvent s'appliquer à des transducteurs à ultrasons utilisés pour des mesures de débit ou de distance, pour des contrôles de défauts, pour des observations ou des repérages de matériels immergés dans un métal liquide quelconque à bas point de fusion, ce métal liquide pouvant être différent de l'alliage NaK et constitué, par exemple, par du sodium, du lithium, de l'étain ou du mercure.

## Revendications

1. Procédé d'immersion dans un métal liquide, avec un bon mouillage, d'un transducteur à ultrasons (17) comportant une enveloppe métallique (24) renfermant la partie active (25) du transducteur et assurant le couplage avec le métal liquide (22) par une partie (24a) de sa surface externe, le métal liquide (22) comportant un niveau libre supérieur (18) surmonté par une atmosphère de gaz neutre susceptible d'être pollué par des impuretés qui se déposent sur la surface de couplage du transducteur lors de son immersion et réduisent en conséquence la mouillabilité et la qualité du couplage de cette surface, caractérisé par le fait :

   - qu'on met en contact dans un récipient indépendant (40) la surface de couplage (24a) du transducteur (17) avec une couche de métal liquide (45) analogue au métal (22) dans lequel on doit réaliser l'immersion du transducteur, de façon a réaliser un bon mouillage de la surface de couplage par le métal liquide,
   - qu'on contrôle la qualité de ce mouillage,
   - qu'on provoque la solidification de la couche de métal liquide (45) sur la surface de couplage du transducteur,
   - et qu'on réalise, sous atmosphère neutre, l'extraction du transducteur portant la couche de métal solidifié sur sa surface de couplage, du récipient (40) et son introduction dans le métal liquide d'immersion.

2. Procédé d'immersion suivant la revendication 1, caractérisé par le fait que, pour assurer un bon mouillage de la surface de couplage (24a) du transducteur par la couche de métal liquide, on maintient l'enveloppe (24) du transducteur et le métal liquide en contact avec cette enveloppe à une température supérieur à 300° C, avant de contrôler le mouillage, pour dissoudre les oxydes éventuellement présents sur la surface de couplage.

3. Procédé d'immersion suivant la revendication 1, caractérisé par le fait que, préalablement à sa mise en contact avec la couche de métal liquide, on réalise sur la surface externe de l'enveloppe métallique (24) du transducteur ne renfermant pas la partie active (25), au moins dans sa zone de couplage (24a), un traitement de surface comportant au moins un maintien à haute température en atmosphère non oxydante suivi d'un revêtement sous vide par une couche mince d'un métal faiblement oxydable ou à faible enthalpie libre de formation de ses oxydes, et on introduit la partie active (25) du transducteur dans l'enveloppe (24).

4. Procédé d'immersion suivant la revendication 1, caractérisé par le fait que, le traitement de la surface externe de l'enveloppe métallique (24) comporte successivement :

   - un étuvage sous hydrogène à une température comprise entre 400 et 500° C,
   - un étuvage sous vide à une température comprise entre 400 et 500° C,
   - et un revêtement métallique par évaporation sous vide (procédé PVD).

5. Procédé d'immersion suivant la revendication 1, caractérisé par le fait que le métal de revêtement appartient au groupe argent-or-platine.

6. Procédé d'immersion suivant l'une quelconque des revendications 4 et 5, caractérisé par le fait que la couche de revêtement métallique a une épaisseur comprise entre 2 et 10 micromètres.

7. Procédé d'immersion suivant la revendication 1, caractérisé par le fait que la couche de métal liquide (45) analogue au métal (22) du guide d'onde a une épaisseur comprise entre 1 et 10 millimètres.

8. Procédé d'immersion suivant la revendication 1, caractérisé par le fait que le métal liquide d'immersion (22) est l'alliage eutectique sodium-potassium NaK.

9. Procédé d'immersion suivant l'une quelconque des revendications 1 à 8, caractérisé par le fait que la mise en contact de la surface de couplage (24a) du transducteur (17) avec un métal liquide analogue au métal liquide d'immersion (22) est réalisée en trempant le transducteur dans un creuset (40) renfermant du métal liquide, le creuset (40) étant ensuite refroidi pour assurer la solidification du métal (45) et le transducteur (17) étant enfin extrait du creuset (40) avec la couche de métal solidifié (45) pour être introduit dans le métal liquide (22).

10. Procédé d'immersion suivant la revendication 9, caractérisé par le fait que le fait que le creuset (40) est placé dans un serpentin (41) parcouru par un fluide calorifique, pour obtenir le refroidissement et la solidification du métal liquide.

11. Procédé d'immersion suivant la revendication 9, caractérisé par le fait que le creuset (40) est disposé dans une cellule à effet Peltier, pour obtenir le refroidissement et la solidification du métal liquide.

12. Procédé d'immersion suivant l'une quelconque des revendications 1 à 11, caractérisé par le fait que le transducteur (17) est introduit dans une enceinte (35) dans laquelle on effectue la mise en contact de sa surface de couplage (24a) avec la couche de métal liquide (45) sous gaz neutre.

13. Procédé d'immersion suivant la revendication 12, caractérisé par le fait que la solidification de la couche de métal liquide (45) est effectuée dans l'enceinte (35) sous gaz neutre et que le transducteur (17) est introduit directement depuis l'enceinte (35), dans le métal liquide d'immersion (22).

14. Procédé d'immersion suivant l'une quelconque des revendications 12 et 13, caractérisé par le fait que l'enveloppe (24) et la partie active (25) du transducteur (17) sont introduites séparément dans l'enceinte (35), la partie active (25) étant introduite dans l'enveloppe (24) à l'intérieur de l'enceinte (35).

15. Dispositif d'immersion dans un métal liquide avec un bon mouillage, d'un transducteur à ultrasons (17) comportant une enveloppe métallique (24) renfermant la partie active (25) du transducteur (17) et assurant le couplage avec le métal liquide (22) par une partie (24a) de sa surface externe, le métal liquide (22) comportant un niveau libre supérieur (18) surmonté par une atmosphère de gaz neutre (30), caractérisé par le fait qu'il comporte :
   - une boîte à gants (35) dont le volume intérieur communique avec l'atmosphère de gaz neutre (30) surmontant le niveau libre (18), par l'intermédiaire d'une ouverture obturable par une paroi amovible (36),
   - un creuset (40) dont les dimensions intérieures sont un peu supérieures aux dimensions du transducteur (17), disposé à l'intérieur de la boîte à gants (35),
   - et un dispositif de refroidissement (41) susceptible de refroidir le creuset (40) placé dans la boîte à gants (35),
   la boîte à gants (35) comportant des moyens pour mettre son volume intérieur à l'atmosphère ou pour le remplir de gaz neutre.

16. Dispositif de revêtement et d'immersion suivant la revendication 15 dans le cas où le transducteur (17) est associé à un dispositif de visualisation par ultrasons (2) dans la cuve d'un réacteur nucléaire à neutrons rapides refroidi par du sodium liquide, ce dispositif de visualisation comportant un guide d'onde rempli de métal liquide à bas point de fusion et comportant, comme partie terminale supérieure, un récipient (15) situé au-dessus de la dalle (1) du réacteur, caractérisé par le fait que la boîte à gants (35) est fixée de façon amovible sur le dispositif de visualisation (2), au-dessus de la dalle du réacteur (1) et autour de la partie supérieure du guide d'onde du dispositif de visualisation surmontée par une atmosphère de gaz inerte (30).

## Claims

1. A process for immersing in a liquid metal, whilst thoroughly wetting, an ultrasonic transducer (17) comprising a metal casing (24) enclosing the active part (25) of the transducer and ensuring the coupling with the liquid metal (22) by a part (24a) of its outer surface, the liquid metal having an upper free level (18) surmounted by an atmosphere of neutral gas liable to pollution by impurities which settle on the coupling surface of the transducer upon its immersion and thus reduce the wettability and the coupling quality of this surface, characerised in that:

   the coupling surface (24a) of the transducer (17) is put in contact, in a separate container (40), with a layer of liquid metal (45) similar to the metal (22) in which the transducer must be immersed, so as to achieve a satisfactory wetting of the coupling surface by the liquid metal,

   the quality of said wetting is checked,

   the solidification of the layer of liquid metal (45) on the coupling surface of the transducer is brought about,

   and the transducer carrying the layer of solidified metal on its coupling surface is removed from the container (40) and immersed in the liquid metal, under a neutral atmosphere

2. An immersion process according to claim 1, characterised in that, in order to ensure a satisfactory wetting of the coupling surface (24a) of the transducer by the layer of liquid metal, the casing (24) of the transducer and the liquid metal in contact with said casing are maintained at a temperature higher than 300°C before checking the wetting, so as to dissolve the oxides which may be present on the coupling surface.

3. An immersion process according to claim 1, characterised by carrying out a surface treatment, prior to the contact with the layer of liquid metal, on the outer surface of the metal casing (24) of the transducer which does not enclose the active part (25), at least in its coupling region (24a), said surface treatment comprising at least the maintaining of it a high temperature in a non-oxidising atmosphere followed by a coating under vacuum with a thin layer of a metal which is slightly oxidizable or has a low free enthalpy of formation of its oxides, and by inserting the active part (25) of the transducer in the casing (24).

4. An immersion process according to claim 3, characterised in that the treatment of the outer surface of the metal casing (24) comprises, in succession:

   a stoving under hydrogen at a temperature between 400 and 500°C,

   a stoving under vacuum at a temperature between 400 and 500°C,

   and a metallic coating by evaporation under vacuum (PVD process).

5. An immersion process according to claim 4, characterised in that the coating metal is one of the silver-gold-platinum group.

6. An immersion process according to either claim 4 or 5, characterised in that the layer of metal coating has a thickness of between 2 and 10 micrometers.

7. An immersion process according to claim 1, characterised in that the layer of liquid metal (45) similar to the metal (22) of the waveguide has a thickness of between 1 and 10 mm.

8. An immersion process according to claim 1, characterised in that the immersion liquid metal (22) is the sodium-potassium eutectic alloy NaK.

9. An immersion process according to any one of claims 1 to 8, characterised in that the coupling surface (24a) of the transducer (17) is put in contact with a liquid metal similar to the immersion liquid metal (22) by plunging the transducer in a crucible (40) containing the liquid metal, the crucible (40) being thereafter cooled to ensure the solidification of the metal (45), and the transducer (17) being thereafter removed from the crucible (40) with the solidified metal layer for immersion in the liquid metal (22).

10. An immersion process according to claim 9, characterised in that the crucible (40) is placed in a coiled hollow tube (41) through which a calorific fluid passes to cool and solidify the liquid metal.

11. An immersion process according to claim 9, characterised in that the crucible (40) is disposed in a Peltier effect cell to produce the cooling and the solidification of the liquid metal.

12. An immersion process according to any one of claims 1 to 11, characterised in that the transducer (17) is placed into an enclosure (35) in which its coupling surface (24a) is put in contact with the layer of liquid metal (45) under a neutral gas.

13. An immersion process according to claim 12, characterised in that the solidification of the layer of liquid metal (45) is effected in the enclosure (35) under a neutral gas and the transducer (17) is introduced directly from the enclosure (35) into the immersion liquid metal (22).

14. An immersion process according to either claim 12 or 13, characterised in that the casing (24) and the active part (25) of the transducer (17) are inserted separately in the enclosure (35), the active part (25) being inserted in the casing (24) within the enclosure (35).

15. A device for immersing in a liquid metal, whilst thoroughly wetting, an ultrasonic transducer (17) comprising a metal casing (24) enclosing the active part (25) of the transducer (17) and ensuring the coupling with the liquid metal (22) by a part (24a) of the outer surface of the casing, the liquid metal (22) having an upper free level (18) surmounted by an atmosphere of neutral gas (30), characterised in that said device comprises:

a glove box (35) whose interior volume communicates with the atmosphere of neutral gas (30) surmounting the free level (18) through an opening which is closable by a detachable wall (36);

a crucible (40) whose inside dimensions are slightly larger than the dimensions of the transducer (17), disposed inside the glove box (35);

and a cooling device (41) for cooling the crucible (40) placed in the glove box (35), the glove box (35) comprising means for putting its interior volume in communication with the atmosphere or for filling it with neutral gas.

16. A coating and immersion device according to claim 15, in the case where the transducer (17) is associated with an ultrasonic visualization device (2) in the vessel of a fast neutron nuclear reactor cooled by liquid sodium, said visualization device comprising a waveguide filled with a liquid metal having a low melting point and including, as the upper end part thereof, a container (15) located above the slab (1) of the reactor, characterised in that the glove box (35) is movably mounted onto the visualization device (2) above the slab of the reactor (1) and around the upper part of the waveguide of the visualization device surmounted by an atmosphere of inert gas (30).

**Patentansprüche**

1. Verfahren zum Eintauchen eines Ultraschallwandlers (17) mit einer metallischen Hülle (24), die den aktiven Teil (25) des Wandlers einschließt und die Kopplung mit einer Metallschmelze (22) durch einen Teil (24a) ihrer Außenoberfläche sichert, in die Metallschmelze mit einer guten Benetzung, wobei die Metallschmelze (22) ein freies oberes Niveau (18) aufweist, über dem sich eine Atmosphäre aus neutralem Gas befindet, die durch Verunreinigungen verschmutzbar ist, die sich auf der Kopplungsoberfläche des Wandlers während dessen Eintauchens abscheiden und infolgedessen die Benetzbarkeit und die Güte der Kopplung dieser Oberfläche vermindern, dadurch **gekennzeichnet**,

- daß man in einem unabhängigen Behälter (40) die Kopplungsoberfläche (24a) des Wandlers (17) mit einer dem Metall (22) analogen Metallschmelzeschicht (45) in Berührung bringt, in das man das Eintauchen des Wandlers vornehmen muß, um eine gute Benetzung der Kopplungsoberfläche durch die Metallschmelze zu bewirken,
- daß man die Güte dieser Benetzung überprüft,
- daß man die Erstarrung der Metallschmelzeschicht (45) auf der Kopplungsoberfläche des Wandlers hervorruft und
- daß man unter neutraler Atmosphäre die Entnahme des die auf der Kopplungsoberfläche erstarrte Metallschicht tragenden Wandlers aus dem Behälter (40) und seine Einführung in die Eintauchschmelze vornimmt.

2. Eintauchverfahren nach dem Anspruch 1, dadurch gekennzeichnet, daß man zum Sichern einer guten Benetzung der Kopplungsoberfläche (24a) des Wandlers durch die Metallschmelzeschicht die Hülle (24) des Wandlers und die Metallschmelze in Berührung mit dieser Hülle auf einer Temperatur über 300 ˚C vor Überprüfung der Benetzung hält, um die ggf. auf der Kopplungsoberfläche vorhandenen Oxide aufzulösen.

3. Eintauchverfahren nach dem Anspruch 1, dadurch gekennzeichnet, daß man vor ihrem Bringen in Kontakt mit der Metallschmelzeschicht auf der Außenoberfläche der metallischen Hülle (24) des Wandlers, die nicht den aktiven Teil (25) einschließt, wenigstens in ihrer Kopplungszone (24a) eine Oberflächenbehandlung durchführt, die wenigstens ein Halten bei hoher Temperatur in nichtoxidierender Atmosphäre mit nachfolgendem Überziehen im Vakuum mit einer dünnen Schicht eines schwach oxidierbaren Metalls oder eines Metalls mit schwacher freier Enthalpie der Bildung seiner Oxide aufweist, und man den aktiven Teil (25) des Wandlers in die Hülle (24) einführt.

4. Eintauchverfahren nach dem Anspruch 3, dadurch gekennzeichnet, daß die Behandlung der Außenoberfläche der metallischen Hülle (24) nacheinander aufweist:
   - eine Heizbehandlung unter Wasserstoff bei einer Temperatur zwischen 400 und 500 °C,
   - eine Heizbehandlung unter Vakuum bei einer Temperatur zwischen 400 und 500 °C,
   - und ein metallisches Überziehen durch Verdampfung unter Vakuum (PVD-Verfahren).

5. Eintauchverfahren nach dem Anspruch 4, dadurch gekennzeichnet, daß das Überzugsmetall zur Gruppe Silber oder Platin gehört.

6. Eintauchverfahren nach irgendeinem der Ansprüche 4 und 5, dadurch gekennzeichnet, daß die Metallüberzugsschicht eine Dicke zwischen 2 und 10 $\mu$m hat.

7. Eintauchverfahren nach dem Anspruch 1, dadurch gekennzeichnet, daß die dem Metall (22) des Hohlleiters analoge Metallschmelzeschicht (45) eine Dicke zwischen 1 und 10 mm hat.

8. Eintauchverfahren nach dem Anspruch 1, dadurch gekennzeichnet, daß die Eintauchmetallschmelze (22) die eutektische Natrium-Kalium-Legierung NaK ist.

9. Eintauchverfahren nach irgendeinem der Ansprüche 1 bis 8, dadurch gekennzeichnet, daß das Bringen der Kopplungsoberfläche (24a) des Wandlers (17) in Berührung mit einer der Eintauchmetallschmelze (22) analogen Metallschmelze durch Eintauchen des Wandlers in einen Metallschmelze enthaltenden Tiegel (40) erfolgt, welcher Tiegel (40) anschließend zur Sicherung der Erstarrung des Metalls (45) abgekühlt wird, und daß der Wandler (17) schließlich aus dem Tiegel (40) mit der erstarrten Metallschicht (45) entnommen wird, um in die Metallschmelze (22) eingeführt zu werden.

10. Eintauchverfahren nach dem Anspruch 9, dadurch gekennzeichnet, daß der Tiegel (40) in einer von einem Wärmeableitfluid durchströmten Rohrschlange (41) angeordnet wird, um die Abkühlung und die Erstarrung der Metallschmelze zu bewirken.

11. Eintauchverfahren nach dem Anspruch 9, dadurch gekennzeichnet, daß der Tiegel (40) in einer Peltiereffektzelle angeordnet wird, um die Abkühlung und die Erstarrung der Metallschmelze zu bewirken.

12. Eintauchverfahren nach irgendeinem der Ansprüche 1 bis 11, dadurch gekennzeichnet, daß der Wandler (17) in ein Gehäuse (35) eingeführt wird, in dem man das Bringen seiner Kopplungsoberfläche (24a) in Kontakt mit der Metallschmelzeschicht (45) unter neutralem Gas vornimmt.

13. Eintauchverfahren nach dem Anspruch 12, dadurch gekennzeichnet, daß die Erstarrung der Metallschmelzeschicht (45) im Gehäuse (35) unter neutralem Gas erfolgt und daß der Wandler (17) vom Gehäuse (35) direkt in die Eintauchmetallschmelze (22) eingeführt wird.

14. Eintauchverfahren nach irgendeinem der Ansprüche 12 und 13, dadurch gekennzeichnet, daß die Hülle (24) und der aktive Teil (25) des Wandlers (17) getrennt in das Gehäuse (35) eingeführt werden und der aktive Teil (25) im Inneren des Gehäuses (35) in die Hülle (24) eingeführt wird.

15. Vorrichtung zum Eintauchen eines Ultraschallwandlers (17), der eine Metallhülle (24) aufweist, die den aktiven Teil (25) des Wandlers (17) einschließt und die Kopplung mit der Metallschmelze (22) durch einen Teil (24a) ihrer Außenoberfläche sichert, in die Metallschmelze mit einer guten Benetzung, die ein freies oberes Niveau (18) aufweist, über dem sich eine Atmosphäre neutralen Gases (30) befindet, dadurch **gekennzeichnet**, daß sie aufweist:
   - einen (Strahlenschutz-)Handschuhkasten (35), dessen Innenvolumen mit der Neutralgasatmosphäre (30) über dem freien Niveau (18) mittels einer durch eine lösbare Wand (36) verschließbaren Öffnung in Verbindung steht,
   - einen Tiegel (40), dessen Innenabmessungen etwas größer als die Abmessungen des im Inneren des Handschuhkastens (35) angeordneten Wandlers (17) sind,

- und eine Abkühlungseinrichtung (41), die sich zum Abkühlen des im Handschuhkasten (35) angeordneten Tiegels (40) eignet,

wobei der Handschuhkasten (35) Mittel zum Öffnen seines Innenvolumens zur Atmosphäre oder zu dessen Füllung mit Neutralgas aufweist.

16. Vorrichtung zum Überziehen und zum Eintauchen nach dem Anspruch 15 im Fall, wo der Wandler (17) mit einer Einrichtung zur Sichtbarmachung durch Ultraschall (2) in der Wanne eines Kernreaktors mit schnellen Neutronen verbunden ist, der durch flüssiges Natrium gekühlt wird, welche Sichtbarmachungseinrichtung einen mit Metallschmelze niedrigen Schmelzpunkts gefüllten Hohlleiter aufweist und als oberen Endteil einen Behälter (15) aufweist, der sich oberhalb der Decke (1) des Reaktors befindet,
dadurch gekennzeichnet,
daß der Handschuhkasten (35) abnehmbar auf der Sichtbarmachungseinrichtung (2) oberhalb der Decke des Reaktors (1) und um den oberen Teil des Hohlleiters der Sichtbarmachungseinrichtung herum befestigt ist, worüber sich eine Inertgasatmosphäre (30) befindet.

FIG.1

FIG.2